# EUROPEAN PATENT SPECIFICATION

(11) **EP 1 188 372 B1**
(45) Date of publication and mention of the grant of the patent: **13.10.2004**
(21) Application number: 01119405.7
(22) Date of filing: 11.08.2001
(51) Int. Cl.: A01K 87/02

(54) **Improved fishing-rod**
Verbesserte Angelrute
Canne à pêche perfectionnée

(30) Priority: 18.09.2000 IT PN000056
(43) Date of publication of application: 20.03.2002
(73) Proprietor: Faps S.r.l., 33080 Fiume Veneto, Pordenone (IT)
(72) Inventor: Pietrobon, Teresina, 33082 Azzano Decimo, Pordenone (IT)
(74) Representative: Giugni, Valter

(56) References cited:
- EP-A- 0 533 105
- US-A- 3 609 906
- US-A- 5 049 422
- US-A- 5 686 155

## Description

The present invention refers to a fishing-rod of the type comprising a plurality of modular sections, the end portions of which are adapted to be jointed to each other in a releasable manner so as to enable the fishing-rod to be assembled and disassembled.

Fishing-rods of the above cited kind are largely known in the art since a long time now, and the sections that make up such fishing-rods are in a variable number in accordance with the overall length required for the different fishing-rods. These sections have a tapering cross-section, ie. a cross-section that decreases starting from the handgrip side of the rod, and their end portions are capable of being jointed to each other by fitting them in axially or joining them in a telescopic manner.

EP-A-05331.05 discloses a fishing rod having the body coated by spraying a metallic-based mixture; this treatment has the drawback to be carried out through an atmosphere plasma spraying process.

Usually, the sections of a fishing-rod are made out of a composite structure formed substantially of layers of unidirectional carbon fibre impregnated with synthetic resins. For manufacturing such sections, use is made of cores in the shape of a frustum of cone, which are also known as "mandrels" in the art, round which said carbon-fibre layers are wound as put under both tension and compression by means of winding presses. Subsequently, using a banding or similar machine, the sections are coated with a band of cellophane, polypropylene or similar material, and the so obtained parts are then allowed to undergo polymerisation, ie. curing through heating in a static furnace.

Two mutually clashing needs generally arise when dealing with fishing-rods of the above described type. On the one side, the need in fact arises for the various sections of the fishing-rod to most stably fit together under use conditions, so as to prevent them from slipping out owing to accidental causes. On the other side, the possibility must on the contrary be ensured for such sections to be easily disjointed from each other so as to enable the length of the fishing-rod to be modified whenever a need arises in this sense during the use thereof.

In order to ensure the required stability of the joint, an extreme mating accuracy in the coupling of the sections with each other is required, and this can usually be obtained by letting such sections undergo a precision-grinding operation. Such a high degree of accuracy, however, gives rise to some practical drawbacks in the normal use of the fishing-rod.

A main one among such drawbacks is connected with the high coefficient of friction that develops between sections of the same material (carbon-to-carbon interface) and tends to cause the contact surfaces to seize, ie. to become stuck, up to the point that they eventually form practically a single mass that is most difficult or even impossible to separate. The friction between fitted-in sections is furthermore accompanied and even magnified by a linear and volumetric shrinkage of the carbon fibres in the fitted-in, ie. jointed sections when these are subject to a temperature rise, for instance when exposed to solar heat. Carbon fibres, in fact, behave in a contrary manner with respect to the majority of the materials when subject to heat stresses.

Different solutions have been devised up to now in view of facilitating the separation, ie. the disengagement of the sections from each other.

A first solution is represented by a reduction in the contact surfaces in correspondence of the fit-in portions of the sections; however, this tends to make the same fit-in engagement of the sections less stable and reliable. Another solution calls for the contact surfaces in the fit-in portions to be lubricated through the application of oily substances or the use of self-lubricating materials such as Teflon (carbon tetrafluoride). This solution, however, proves scarcely practical, not adequately durable and rather expensive.

It therefore is a purpose of the present invention to do away with the such typical drawbacks of the afore cited prior-art solutions and to provide a simple and effective manner to solve the problem of making it easy to disjoint the sections of the fishing-rod without reducing the effectiveness of their connection under normal use conditions.

According to the present invention, such an aim is reached in a fishing-rod formed by modular sections, in which at least the fit-in end portions of the sections are coated with a glass-fibre fabric which is aluminised on its surface through infiltration of alumina (aluminium hydroxide), as this is recited in the appended claims.

Features and advantages of the present invention will anyway be more readily and clearly understood from the description that is given below by way of nonlimiting example with reference to the accompanying drawings, in which:
- Figure 1 is a schematical view of the end portion of a section for a fishing-rod according to the present invention, with a particular detail thereof duly enlarged for better evidence;
- Figures 2A and 2B are schematical views of the jointed end portions of fishing-rod sections in two different embodiments thereof according to the present invention, with a particular detail thereof duly enlarged for better evidence;
- Figure 3 is a schematical view of two sections of a fishing-rod in a further embodiment thereof according to the present invention, with a particular detail thereof duly enlarged for better evidence.

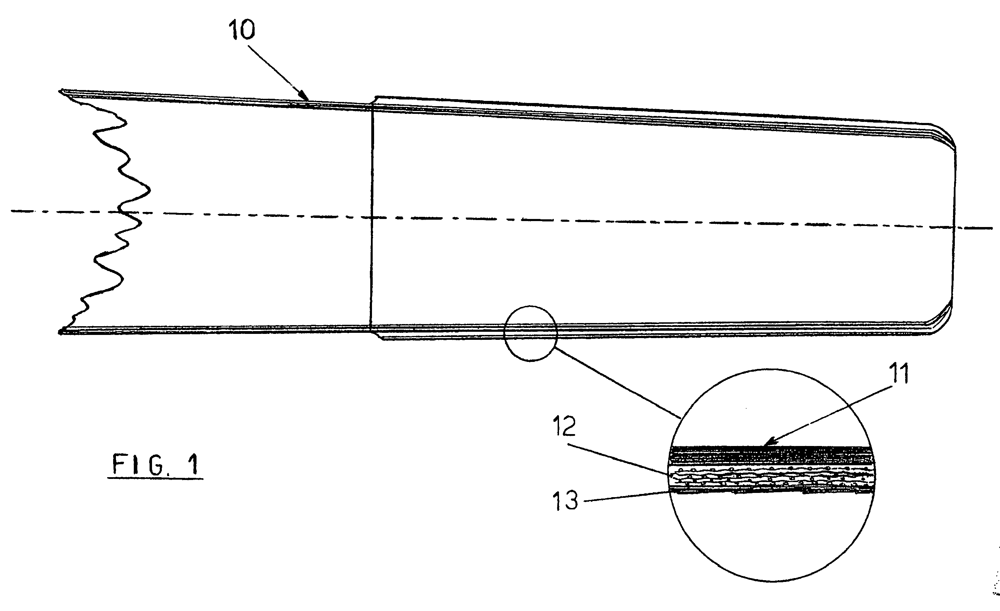

Figure 1 can be noticed to schematically illustrate the end portion 10 of a fishing-rod section, the body of which (as this is shown in the enlarged and evidenced detail) is made up by an inner carbon-fibre layer 11, on which a further glass-fibre layer 12 is then laid. Both layers are normally impregnated with synthetic resin.

According to the present invention, the end portion 10 is coated with an outer layer 13 of aluminised fabric. In particular, the layer 13 is constituted by a glass-fibre fabric that is pre-impregnated with synthetic resin and in which alumina (aluminium hydroxide) granules are incorporated by infiltration in the surface thereof. This particular kind of coating enables the sections of the fishing rod to be assigned good resistance properties against the wear and tear brought about by the sections themselves being repeatedly jointed to and disjointed from each other during the use of the fishing-rod. In addition, this coating has also antistatic properties, since the alumina granules that crop up, ie. appear on the surface create as many carbon/aluminium dipoles with glass-fibre interposed therebetween, which eliminate electrostatic charges, thereby keeping the fit-in zone free of water droplets and dust particles. Essential is then the fact that, thanks to the presence of the granules of ceramic material, the surface of the coating fabric 13 has a roughness that, while on the one side ensuring a good tightness and strength of the jointing, on the other side enables the sections of the fishing-rod to be most easily disjointed from each other, as this is actually the purpose of the present invention.

The aluminised fabric offers a further advantage. As compared with carbon, whose "black" surface absorbs infrared rays to a noticeable extent, aluminium has a very light colour tonality and heats up to a much lesser extent. The appearance of the aluminised fabric in the fishing-rod is furthermore much like the one of a reflector, since the surface is "rifled" helically due to the winding effect of the polypropylene band that is used in manufacturing the sections. Therefore, by combining the reflectivity of the aluminium with the mechanical reflector effect, an outer surface is obtained which remains "cold" when hit by infrared rays, thereby limiting the effects due to thermal stresses, as well as to mechanical ones.

In a preferred manner, the aluminised coating fabric 13 is solely applied on to the end portions of the sections 10, but it will be readily appreciated that it may be applied so as to cover the whole length of the same sections, thereby providing them with an improved gripping surface for the user of the fishing-rod and extending to the entire fishing-rod the advantages that have been described above with reference to the sole fit-in portions of the individual sections. Furthermore, the coating fabric 13 is preferably applied on to the section of the fishing-rod as a single piece of cloth wound without any overlapping of the edges thereof, since no need actually arises for any further extent of surface roughness to be created in order to ensure an adequate grip.

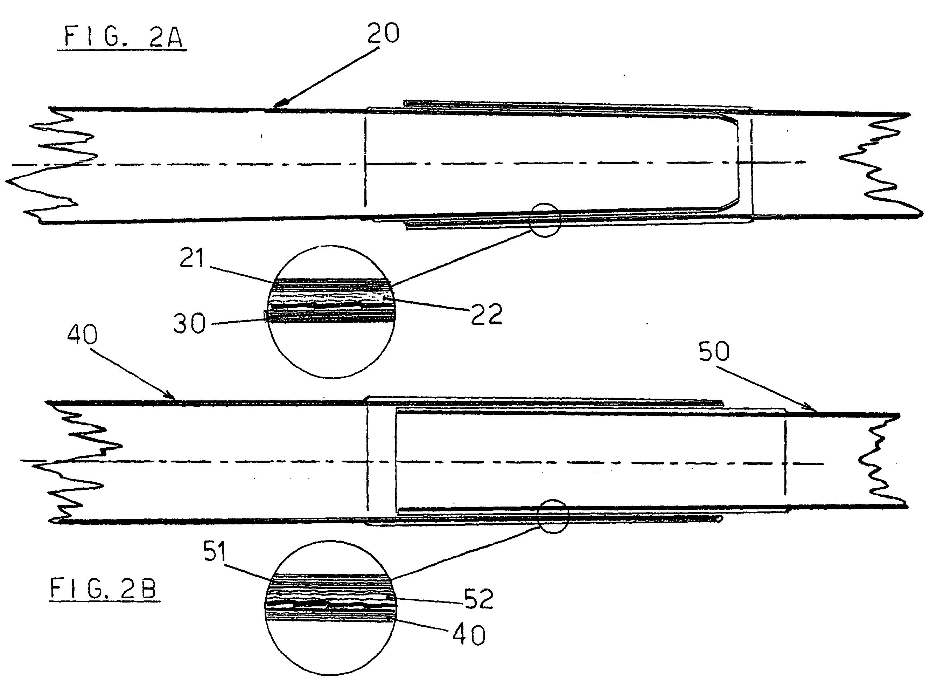

Figure 2A can be noticed to illustrate the end portions of two sections of a fishing-rod according to the present invention, in which said two sections are connected to each other by means of an axial fit-in joint. The end portion 20 of the male section and the end portion 30 of the female section normally have respective conjugate frusto-conical contours. As illustrated also in Figure 1, in the properly evidenced and enlarged detail it can be noticed that the body of the section 20 is provided with an inner layer 21 of carbon fibre, over which there is then laid a further layer 22 of aluminised material such as glass fibre containing granules of ceramic material Both layers are normally impregnated with a synthetic resin. The body of the section 30 is on the contrary made normally of carbon fibre impregnated with a synthetic resin.

Figure 2B illustrates the end portions of two sections of a fishing-rod according to the present invention, which are however connected with each other by means of a telescopic-type of joint. In this case, the successive sections 40 and 50 have respective cylindrical contours featuring different diameters. The body of the inner section 50 has an inner layer 51 of carbon fibre and an outer layer 52 of aluminised glass fibre. On the contrary, the body of the outer section 40 is normally made of carbon fibre. All these layers are normally impregnated with a synthetic resin.

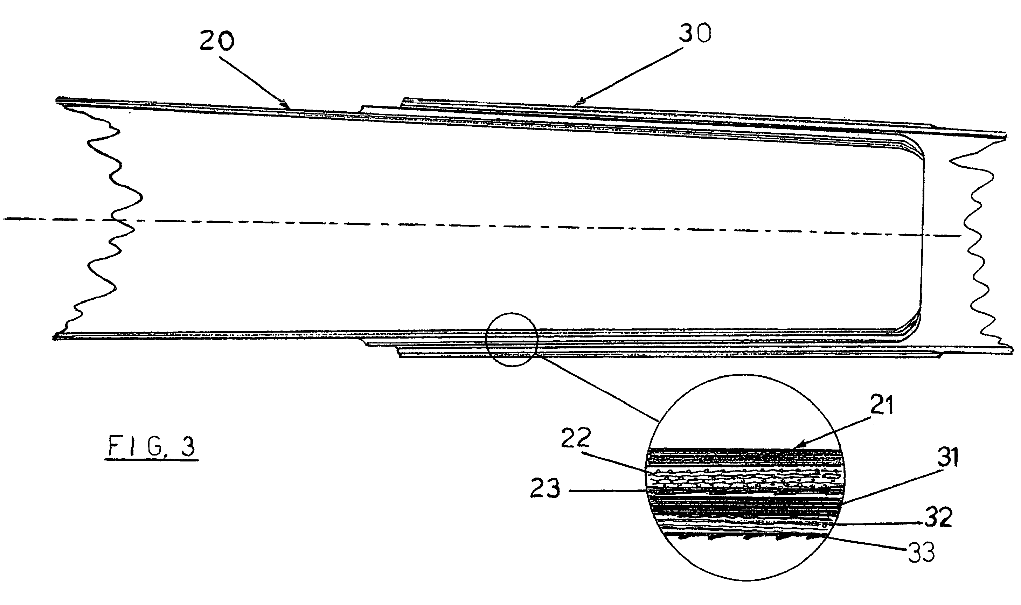

Figure 3 illustrates a variant of the embodiment illustrated in Figure 2A, ie. a fishing-rod with sections 20 and 30 connected with each other through an axial fit-in joint. In this case, the section 30 features a body 21 made of carbon fibre with a layer 22 of glass fibre coated by an aluminised layer 23 laid thereupon. Furthermore, the section 30 has a fully similar conformation, with a body 31 of carbon fibre, a layer 32 of glass fibre laid thereupon and an outer surface 33 of aluminised fabric. This solution is the most advantageous one since, further to creating the most favourable conditions for assembling and disassembling the various sections that form the fishing-rod, it ensures a safer, firmer and more precise grip for the hand of the user.

## Claims

1. Fishing-rod comprising a plurality a plurality of modular sections, the end portions of which are adapted to be jointed to each other in a releasable manner so as to enable the fishing-rod to be assembled and disassembled, in which said sections are thermoformed out of carbon fibre impregnated with synthetic resin and coated by a metallic layer, **characterized in that** at least the fit-in end portions (10; 20; 30; 40; 50) of the sections are coated with a fabric (13; 22, 23; 32, 33; 52) incorporating alumina particles, which is wound on the sections of the fishing rod.

2. Fishing-rod according to claim 1, **characterized in that** the coating fabric (13; 22, 23; 32, 33; 52) is constituted by a glass-fibre layer that is impregnated with synthetic resin, and that the alumina particles are incorporated in the fabric by infiltration in the surface thereof.

3. Fishing-rod according to claim 1 or 2, **characterized in that** the coating fabric (13; 22, 23; 32, 33; 52) is applied on to the section as a single piece of cloth wound without any overlapping of the edges thereof.

## Patentansprüche

1. Angelrute, die eine Vielzahl modularer Abschnitte umfasst, deren Endteile so eingerichtet sind, dass sie lösbar miteinander verbunden werden, so dass die Angelrute zusammengesetzt und auseinander genommen werden kann, wobei die Abschnitte aus mit Kunstharz imprägnierter und mit einer Metallschicht überzogener Kohlefaser warmgeformt werden, **dadurch gekennzeichnet, dass** wenigstens die Einpass-Endteile (10; 20; 30; 40; 50) der Abschnitte mit einem Gewebe (13; 22, 23; 32, 33; 52) überzogen sind, in das Tonerdeteilchen eingeschlossen sind und das auf die Abschnitte der Angelrute gewickelt ist.

2. Angelrute nach Anspruch 1, **dadurch gekennzeichnet, dass** das Überzugsgewebe (13; 22, 23; 32, 33; 52) durch eine Glasfaserschicht gebildet wird, die mit Kunstharz imprägniert ist, und dass die Tonerdeteilchen in dem Gewebe durch Infiltrieren in die Oberfläche desselben eingeschlossen werden.

3. Angelrute nach Anspruch 1 oder 2, **dadurch gekennzeichnet, dass** das Überzugsgewebe (13; 22, 23; 32, 33; 52) auf den Abschnitt als einzelnes Stoffstück aufgebracht wird, das ohne Überlappung der Ränder desselben gewickelt wird.

## Revendications

1. Canne à pêche comprenant une pluralité de sections modulaires dont les parties d'extrémité sont conçues pour être jointes les unes aux autres de manière amovible de façon à permettre le montage et le démontage de la canne à pêche, dans laquelle lesdites sections sont thermoformées à partir de fibres de carbone imprégnées de résine synthétique et revêtues d'une couche métallique, **caractérisée en ce qu'**au moins les parties d'extrémité de raccord (10 ; 20 ; 30 ; 40 ; 50) des sections sont revêtues d'un tissu (13 ; 22, 23 ; 32, 33 ; 52) incorporant des particules d'alumine, qui est enroulé sur les sections de la canne à pêche.

2. Canne à pêche selon la revendication 1, **caractérisée en ce que** le tissu de revêtement (13 ; 22, 23 ; 32, 33 ; 52) est constitué par une couche de fibres de verre qui est imprégnée de résine synthétique, et **en ce que** les particules d'alumine sont incorporées dans le tissu par infiltration dans sa surface.

3. Canne à pêche selon la revendication 1 ou 2, **caractérisée en ce que** le tissu de revêtement (13 ; 22, 23 ; 32, 33 ; 52) est appliqué sur la section en tant que morceau unique de tissu sans aucun chevauchement des bords.
